# EUROPEAN PATENT SPECIFICATION

(11) **EP 3 276 448 B1**
(45) Date of publication and mention of the grant of the patent: **15.01.2020**
(21) Application number: 16796310.7
(22) Date of filing: 06.05.2016
(51) Int. Cl.: G06F 3/01, G01J 1/02, G01J 1/42, G06F 3/03

(54) **WEARABLE ELECTRONIC DEVICE, GESTURE DETECTION METHOD FOR WEARABLE ELECTRONIC DEVICE, AND GESTURE DETECTION PROGRAM FOR WEARABLE ELECTRONIC DEVICE**
AM KÖRPER TRAGBARE ELEKTRONISCHE VORRICHTUNG, GESTENERKENNUNGSVERFAHREN FÜR EINE AM KÖRPER TRAGBARE ELEKTRONISCHE VORRICHTUNG UND GESTENERKENNUNGSPROGRAMM FÜR EINE AM KÖRPER TRAGBARE ELEKTRONISCHE VORRICHTUNG
DISPOSITIF ÉLECTRONIQUE PORTABLE, PROCÉDÉ DE DÉTECTION DE GESTE POUR DISPOSITIF ÉLECTRONIQUE PORTABLE, ET PROGRAMME DE DÉTECTION DE GESTE POUR DISPOSITIF ÉLECTRONIQUE PORTABLE

(30) Priority: 20.05.2015 JP 2015102965
(43) Date of publication of application: 31.01.2018
(73) Proprietor: Konica Minolta, Inc., Tokyo 100-7015 (JP)
(72) Inventor: ISHII, Noriyuki, Tokyo 100-7015 (JP); AMANO, Suguru, Tokyo 100-7015 (JP)
(74) Representative: Hoffmann Eitle
(86) International application number: PCT/JP2016/063639
(87) International publication number: WO 2016/185916

(56) References cited:
- WO-A1-2011/001761
- WO-A1-2015/037273
- JP-A- 2007 101 618
- JP-A- 2009 123 004
- JP-A- 2011 192 266
- JP-A- 2011 221 672
- JP-A- 2014 062 426
- JP-A- 2014 075 759
- US-A1- 2011 310 005
- US-A1- 2014 078 040
- US-A1- 2014 319 326

## Description

### TECHNICAL FIELD

The present invention relates to a wearable electronic device capable of being worn by a wearer, and particularly to a wearable electronic device capable of recognizing a given gesture. The present invention also relates to a gesture detection method for the wearable electronic device, and a gesture detection program for the wearable electronic device.

### BACKGROUND ART

Generally, a mobile terminal device such as a smartphone (multifunctional mobile phone), which has been recently rapidly developed, is provided with a touch panel, wherein a user uses the touch panel to perform a necessary input manipulation for causing a desired image to be displayed, inputting information, or the like. However, there is a situation where the user wants to perform the input manipulation without touching the touch panel, for example, when the user's hands are wet or dirty. Therefore, a device capable of enabling a user to perform the input manipulation by means of a gesture such as a body gesture or a hand gesture as one communication means is been researched and developed. As one example, there is a technique disclosed in the following JP 2013-534009A.

A mobile computing device disclosed in this JP 2013-534009A comprises: a sensor system configured to obtain data relating to three-dimensional user movements, where the sensor system includes an infrared (IR) light emitting diode (LED) and an IR proximity sensor; a sensor controller module communicatively coupled to the sensor system and configured to identify properties of the device indicative of clarity of the data relating to the three-dimensional user movements obtained by the sensor system and probability of correct identification regarding the three-dimensional user movements and to regulate power consumption of at least one of the IR LED and the IR proximity sensor of the sensor system based on the properties of the device.

In the sensor system disclosed in the JP 2013-534009A, the IR proximity sensor is operable to obtain data relating to the three-dimensional user movements, i.e., gestures. Thus, when light including a relatively large amount of infrared light, from a light source such as the sun or a halogen lamp, enters the IR proximity sensor, an erroneous detection is likely to occur because it is difficult to discriminate whether the light is infrared light from a user or infrared light from the light source.

Other examples can be seen in documents US 2014/078040 A1, US 2011/310005 A1, JP 2014 062426 A, and US 2014/319326A1.

US 2014078040 A1 discloses a system with an image sensor which commutes between two different modes for detection of hand gestures and IR light-token gestures depending on some pixels having a high luminance value.

US 2011310005 A1 and US2014319326 A1 disclose different systems for detection of hand gestures based on a proximity sensor, where the measurement of an illuminance is used to adjust the light conditions via a light source.

JP2014062426 A discloses a sanitary apparatus harnessed with a system for detection of hand gestures based on a pyroelectric proximity sensor, where the measurement of an illuminance is used to adjust the sensitivity of the proximity sensor.

### SUMMARY OF INVENTION

The present invention has been made in view of the above circumstance, and an object thereof is to provide a wearable electronic device capable of reducing an erroneous detection of a gesture, a gesture detection method for the wearable electronic device, and a gesture detection program for the wearable electronic device.

The present invention provides a wearable electronic device, a gesture detection method therefor and a gesture detection program therefor as defined by independent claims 1, 7 and 9, respectively. The dependent claims define further advantageous realisations.

The
wearable electronic device, the gesture detection method therefor and the gesture detection program therefor make it possible to reduce an erroneous detection of a gesture.

These and other objects, features, and advantages of the present invention will become apparent upon reading of the following detailed description along with the accompanying drawings.

### BRIEF DESCRIPTION OF DRAWINGS

FIG. 1 is a perspective view depicting a structural configuration of a wearable electronic device according to one embodiment related to the present invention.
FIG. 2 is a front view depicting the structural configuration of the wearable electronic device.
FIG. 3 is a top view depicting the structural configuration of the wearable electronic device.
FIG. 4 is a schematic sectional view depicting a configuration of a display unit in the wearable electronic device.
FIG. 5 is a diagram depicting a configuration of a proximity sensor in the wearable electronic device.
FIG. 6 is a block diagram depicting an electrical configuration of the wearable electronic device.
FIG. 7 is a front view depicting a worn state of the wearable electronic device.
FIG. 8 is a side view and a fragmentary top view depicting the worn state of the wearable electronic device.
FIG. 9 is a diagram depicting one example of an image which is viewed by a user through a see-through type image display.
FIG. 10 is charts depicting one example of outputs of a proximity sensor in the wearable electronic device.
FIG. 11 is a flowchart depicting operation of a control section in the wearable electronic device.
FIG. 12 is a flowchart depicting operation of a gesture processing section in the wearable electronic device.
FIG. 13 is a graph for explaining a relationship between a detection wavelength band of an illuminance sensor and a receiving wavelength band of a proximity sensor, with respect to a radiation intensity spectrum of a halogen lamp as one of a light source.
FIG. 14 is a graph indicating spectra AM0 (outer space) and AM1.5 (earth's surface) of sunlight as another example of the light source.
FIG. 15 is a flowchart depicting another operation of the control section in the wearable electronic device.
FIG. 16 is diagrams for explaining an erroneous detection of a gesture, occurring when the wearable electronic device is relatively moved with respect to the light source.

### DESCRIPTION OF EMBODIMENTS

Based on the drawings, one embodiment related to the present invention will now be described. It should be noted that elements or components assigned with the same reference sign in the figures mean that they are identical, and therefore duplicated description thereof will be omitted appropriately. In this specification, when an element or component is generically described, it is specified by assigning thereto a reference sign without any suffix, whereas, when an element or component is described as an individual element or component, it is specified by assigning thereto a reference sign with a suffix.

A wearable electronic device according to this embodiment is an electronic device capable of being worn by a person and detecting a given gesture, wherein it comprises: an illuminance measurement section for measuring an illuminance of first light having a first wavelength band; a gesture detection section for detecting second light having a second wavelength band to thereby detect a gesture; and a control section for disabling the gesture detection section when a result of the measurement in the illuminance measurement section is equal to or greater than a pre-set threshold, wherein the first wavelength band includes at least a band not overlapping the second wavelength band. This wearable electronic device may be an electronic device for an arbitrary purpose. However, the embodiment will be more specifically described below based on one example where the wearable electronic device is a so-called head-mounted display (HMD) which further includes a head-mountable member designed to be worn on a head of a user.

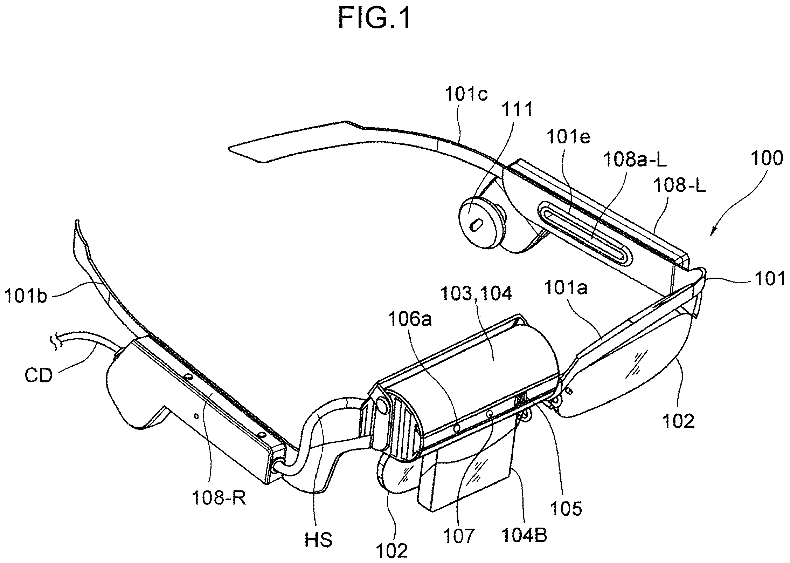

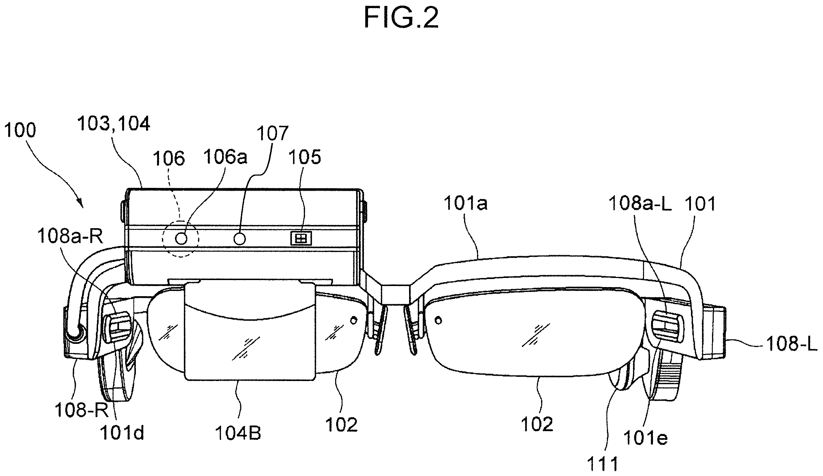

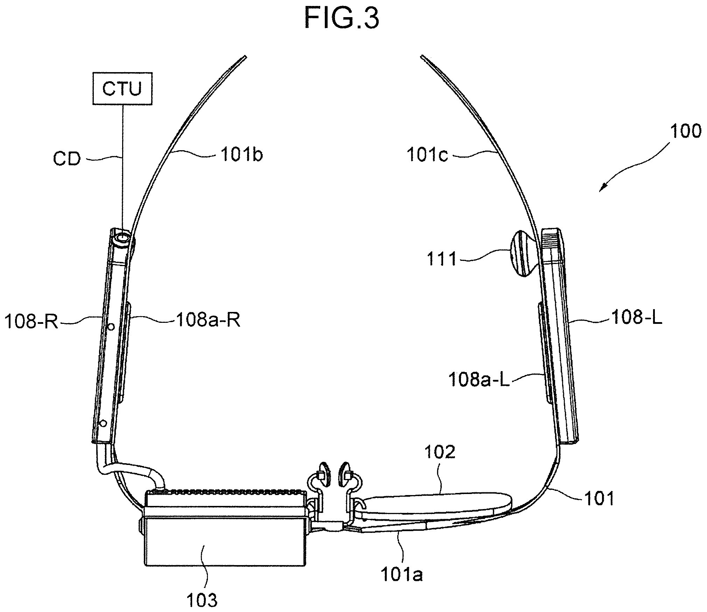

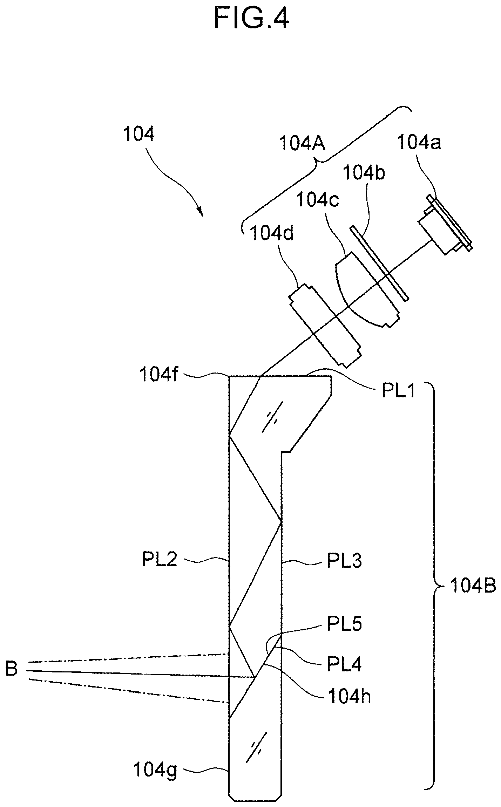

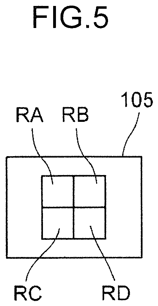

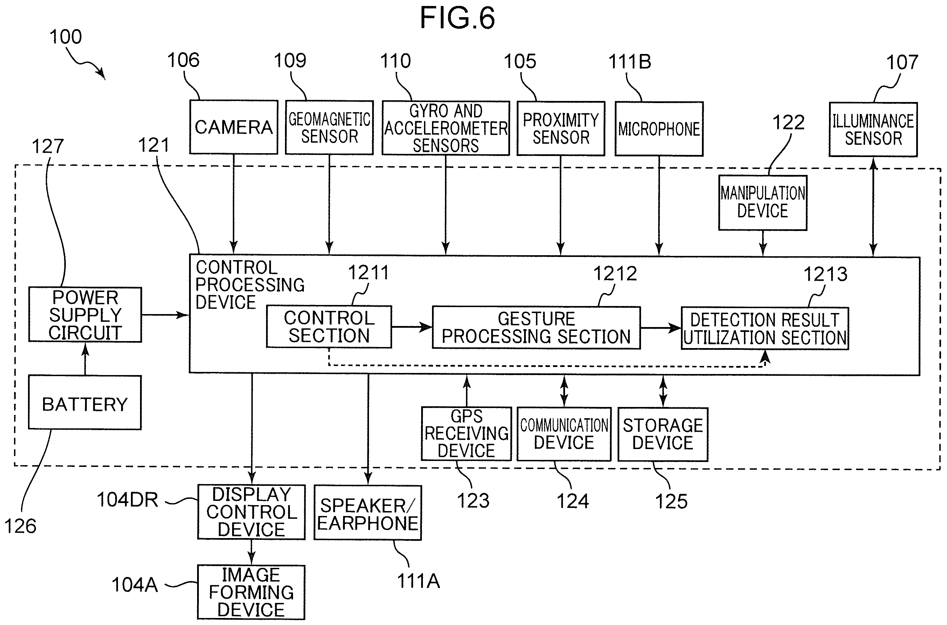

FIG. 1 is a perspective view depicting a structural configuration of a wearable electronic device according to this embodiment. FIG. 2 is a front view depicting the structural configuration of the wearable electronic device according to this embodiment. FIG. 3 is a top view depicting the structural configuration of the wearable electronic device according to this embodiment. FIG. 4 is a schematic sectional view depicting a configuration of a display unit in the wearable electronic device according to this embodiment. FIG. 5 is a diagram depicting a configuration of a proximity sensor in the wearable electronic device according to this embodiment. FIG. 6 is a block diagram depicting an electrical configuration of the wearable electronic device according to this embodiment. In the following description, the terms "right side" and "left side" of a HMD 100 mean, respectively, a right side and a left side of a user who wears the HMD 100.

First of all, the structural configuration of the HMD 100 will be described. As depicted in FIGS. 1 to 3, the HMD 100 according to this embodiment includes a frame 101 which is one example of a head-mountable member designed to be worn on a head of a user. The frame 101 having an approximately angular C shape in top view has a front portion 101a to which two eyeglass lenses 102 are attached, and right and left lateral portions 101b, 101c extending rearwardly from opposite ends of the front portion 101a, respectively. The two eyeglass lenses 102 attached to the frame 101 may or may not have a refractive power (optical power, inverse of the focal length).

A hollow cylindrical device main body 103 is fixed to the front portion 101a of the frame 101 at a position on an upper side of the right eyeglass lens 102 (which may be replaced with the left eyeglass lens 102 depending on a user's dominant eye or the like). The device main body 103 is provided with a display unit 104. Inside the device main body 103, a display control device 104 DR (see FIG. 6 described later) is installed which is operable to govern display control of the display unit 104, based on instructions from an aftermentioned control processing device 121. On an as-needed basis, two display units may be arranged in front of both eyes, respectively.

In FIG. 4, the display unit 104 is constructed such that it includes an image forming device 104A and an image display device 104B. The image forming device 104A is installed inside the device main body 103, and includes a light source 104a, a unidirectional diffusion plate 140b, a condenser lens 104c, and a display element 104d. On the other hand, the image display device 104B as a so-called see-through type display device is a generally plate-shaped element disposed to extend downwardly from the device main body 103 in parallel relation to one of the eyeglass lenses 102 (see FIG. 1), and includes an ocular prism 104f, a deflector prism 104g, and a hologram optical element 104h.

The light source 104a has a function of illuminating the display element 104d, and is composed, for example, of an RGB-integrated light-emitting diode (LED) capable of generating light having three wavelength bands: 462 ± 12 nm (blue light (B light)); 525 ± 17 nm (green light (G light)); and 635 ± 11 nm (red light (R light)), as expressed by peak wavelength of light intensity and wavelength width of half-value light intensity.

The display element 104d is provided as a means to display an image while modulating emitted light from the light source 104a according to image data, and composed of a transmissive liquid crystal display element including a matrix of pixels each serving as a light transmission region. It is to be understood that the display element 104d may be composed of a reflective display element.

The ocular prism 104f is provided as a means to cause image light entering from the display element 104d through a base end face PL1 thereof to undergo total reflection at an inner lateral surface PL2 and an outer lateral surface PL3 opposed to each other in parallel relation, so as to enable the image light to be guided to a user's eye via the hologram optical element 104h, and simultaneously to allow external light to transmit therethrough and reach to the user's eye. For example, it is formed of an acrylic-based resin, together with the deflector prism 104g. The ocular prism 104f and the deflector prism 104g are arranged to clamp the hologram optical element 104h by their inclined surfaces PL4, PL5 each inclined with respect to the inner and outer lateral surfaces PL2, PL3, and bonded together by an adhesive.

The deflector prism 104g is joined to and integrated with the ocular prism 104f to form an approximately parallel plate. In this embodiment, the eyeglass lens 102 (see FIG. 1) is worn between the display unit 104 and the user's eye. In this case, even a user who usually uses eyeglasses can observe an image.

The hologram optical element 104h is a volume phase reflection hologram configured to diffract and reflect image light (light having wavelengths corresponding to three primary colors) output from the display element 104d so as to guide the image light to a pupil B of the user's eye, and more specifically to enlarge an image displayed on the display element 104d and guide the enlarged image to the user's eye in the form of a virtual image. For example, the hologram optical element 104h is formed to diffract (reflect) light having three wavelength bands: 465 ± 5 nm (B light); 521 ± 5 nm (G light); and 634 ± 5 nm (R light), as expressed by peak wavelength of diffraction efficiency and wavelength width of half-value diffraction efficiency. The term "peak wavelength of diffraction efficiency" means a wavelength at a time when the diffraction efficiency becomes a peak, and the term "wavelength width of half-value diffraction efficiency" means a wavelength width at a time when the diffraction efficiency becomes a half of peak diffraction efficiency.

In the display unit 104 configured as above, light emitted from the light source 104a is diffused by the unidirectional diffusion plate 140b, and, after being condensed by the condenser lens 104c, enters the display element 104d. The light entering the display element 104d is modulated on a pixel-by-pixel basis, based on image data input from the display control device 104 DR, and output as image light. In this way, a color image is displayed on the display element 104d. The image light from the display element 104d enters an inside of the ocular prism 104f from the base end face PL1 thereof, and, after being totally reflected at the inner lateral surface PL2 and the outer lateral surface PL3 plural times, enters the hologram optical element 104h. The light entering the hologram optical element 104h is reflected thereat, and the reflected light transmits through the inner lateral surface PL2 and reaches the pupil B. At the position of the pupil B, the user can observe an enlarged virtual image of the image displayed on the display element 104d, i.e., can visually recognize the virtual image as a screen image formed in the image display device 104B.

On the other hand, each of the ocular prism 104f, the deflector prism 104g and the hologram optical element 104h allows external light to almost fully transmit therethrough, so that the user can observe an external image (real image) therethrough. Therefore, the virtual image of the image displayed on the display element 104d is observed such that it overlaps part of the external image. As above, a user of the HMD 100 can simultaneously observe an image provided from the display element 104d via the hologram optical element 104h, and an external image. In the case where the display unit 104 is in a non-display state, the image display device 104B simply becomes transparent, so that the user can observe only an external image. In this embodiment, a light source, a liquid crystal display element and an optical system are combined together to form the display unit. In place of the combination of the light source and the liquid crystal display element, a self light emissive type display element (e.g. an organic EL display element) may be used. Further, in place of the combination of the light source, the liquid crystal display element and the optical system, a transmissive organic EL display panel having a light transmissive property (optical transparency) in a non-luminescent state may be used.

Returning to FIGS. 1 and 3, a front end of the device main body 103 is provided with a proximity sensor 105 disposed on the side of a central region of the frame 101, a lens 106a of a camera 106 disposed on a lateral side of the frame 101, and an illuminance sensor 107 disposed between the proximity sensor 105 and the camera lens 106a, in such a manner that they face forwardly. Thus, in the embodiment depicted in FIGS. 1 to 3, a measurement direction of the illuminance sensor 107 and a detection direction of the proximity sensor 105 are set to the same direction.

The state in which the measurement direction of the illuminance sensor 107 and the detection direction of the proximity sensor 105 are the same directions includes not only a state in which a central axis of a measurement range of the illuminance sensor 107 and a central axis of a detection range of the proximity sensor 105 are parallel to each other, but also a state in which the illuminance sensor 107 and the proximity sensor 105 are arranged in a positional relationship which allows the two sensors to exhibit a similar tendency in terms of a relationship between an entering direction and a detected intensity of light having a wavelength range detectable by the two sensors, even though the two central axes slightly intersect with each other.

As used in this specification, the term "proximity sensor" means a sensor configured to detect whether or not an object, e.g., a portion (hand, finger(s) or the like) of a human body is present within a detection region in a proximity range in front of a detection surface of the proximity sensor, so as to detect that such an object is in front of a user's eye in proximal relation thereto. The proximity range may be appropriately set depending on trait and/or preference of a manipulator. As one example, it may be set in a distance range within 200 mm from the detection surface of the proximity sensor. In the case where the distance from the proximity sensor is within 200 mm, a user can bend his/her arm to move his/her palm or finger(s) into and out of the field of view thereof, so that it becomes possible to easily perform manipulation by means of a gesture using user's hand or finger(s), and reduce a risk that a human body other than the user, a furniture or the like is erroneously detected.

The proximity sensor includes a passive type proximity sensor and an active type proximity sensor. The passive type proximity sensor includes a detection section operable to detect invisible light and electromagnetic waves radiated from an object when the object comes close thereto. Examples of the passive type proximity sensor include a pyroelectric sensor operable to detect invisible light such as infrared light radiated from a human body coming close thereto, and a capacitance sensor operable to detect a change in capacitance caused by a human body coming close thereto. The active type proximity sensor includes a radiation section for invisible light or sound wave, and a detection section configured to receive the invisible light or sound wave returned by reflection at an object. Examples of the active type proximity sensor include: an infrared sensor operable to radiate infrared rays and receive the infrared rays reflected at an object; a laser sensor operable to radiate laser light and receive the laser light reflected at an object; and an ultrasonic sensor operable to radiate ultrasonic wave and receive the ultrasonic wave reflected at an object. The passive type proximity sensor has excellent low-power consumption performance, because there is no need for the passive type proximity sensor to radiate energy toward an object. The active type proximity sensor makes it easier to improve certainty of detection. For example, even in a situation where a user wears gloves which do not allow detection target light radiated from a human body, such as infrared light, to transmit therethrough, it is possible to detect a hand motion of the user. It is to be understood that a plurality of types of proximity sensors may be used in combination.

In this embodiment, as the proximity sensor 105, a pyroelectric sensor is used which includes a plurality of pyroelectric elements arranged in a two-dimensional matrix pattern. In FIG. 5, the proximity sensor 105 is constructed such that it includes four pyroelectric elements RA, RB, RC, RD arranged in a two-row and two-column matrix, and configured to receive, as detection target light, invisible light radiated from a human body, such as infrared light, and output corresponding signals, respectively, from the pyroelectric elements RA, RB, RC, RD. The intensity of each of the outputs from the pyroelectric elements RA, RB, RC, RD changes according to a distance from a light-receiving surface of the proximity sensor 105 to an object. More specifically, the intensity becomes larger as the distance becomes smaller.

Returning to FIGS. 1 to 3, a right device sub-body 108-R is attached to the right lateral portion 101b of the frame 101, and a left device sub-body 108-L is attached to the left lateral portion 101c of the frame 101. The right device sub-body 108-R and the left device sub-body 108-L are formed such that each of them has an elongate plate shape, and inner surfaces thereof have, respectively, elongate protrusions 108a-R, 108a-L. By engaging the elongate protrusion 108a-R with an elongate hole 101d of the right lateral portion 101b of the frame 101, the right device sub-body 108-R is attached to the frame 101 in a positioned state. Similarly, by engaging the elongate protrusion 108a-L with an elongate hole 101e of the left lateral portion 101c of the frame 101, the left device sub-body 108-L is attached to the frame 101 in a positioned state.

Inside the right device sub-body 108-R, a geomagnetic sensor 109 (see FIG. 6), and gyro and accelerometer sensors 110 (see FIG. 6) are installed. Inside the left device sub-body 108-L, a speaker (or earphone) 111A and a microphone 111B (see FIG. 6) are installed. The device main body 103 and the right device sub-body 108-R are communicatively connected together via a wire HS. Similarly, the device main body 103 and the left device sub-body 108-L are communicatively connected together via a non-depicted wire. As briefly depicted in FIG. 3, the right device sub-body 108-R is connected to a control unit CTU via a cord CD extending from a rear end thereof. The HMD 100 may be configured to be manipulated by voice, based on an output signal generated from the microphone 111B in response to voice which is input. Further, the device main body 103 and the device sub-body 108 may be configured to be wirelessly connected together.

Next, an electrical configuration of the HMD 100 will be described. In FIG. 6, the HMD 100 includes the control unit CTU, the image forming device 104A, the display control device 104 DR, the proximity sensor 105, the camera 106, the illuminance sensor 107, the geomagnetic sensor 109, the gyro and accelerometer sensors 110, the speaker 111A, and the microphone 111B. The control unit CTU includes a control processing device 121, a manipulation device 122, a GPS receiving device 123, a communication device 124, a storage device 125, a battery 126, and a power supply circuit 127.

The display control device 104 DR is a circuit connected to the control processing device 121 and configured to control the image forming device 104A under control of the control processing device 121, thereby causing the image forming device 104A to form an image. The image forming device 104A is as described above.

The camera 106 is a device connected to the control processing device 121 and configured to generate an image of an object under control of the control processing device 121. As one example, the camera 106 is constructed such that it includes : an imaging optical system for forming an optical image of an object on a given imaging plane; an image sensor disposed such that a light-receiving surface thereof is coincident with the imaging plane, and designed to convert the optical image of the object to an electric signal; and a digital signal processor (DSP) for subjecting an output of the image sensor to heretofore-known image processing to generate an image (image data). The imaging optical system is constructed such that it includes one or more lenses, wherein the aforementioned camera lens 106a is comprised therein as one of the one or more lenses. The camera 106 is operable to the generated image data to the control processing device 121.

The geomagnetic sensor 109 is a circuit connected to the control processing device 121 and configured to measure geomagnetism to thereby measure a compass direction corresponding to a forward direction of the HMD 100. The geomagnetic sensor 109 is operable to output the measured compass direction to the control processing device 121. The gyro and accelerometer sensors 110 are circuits connected to the control processing device 121 and configured to measure a roll angular velocity about an X-axis, a pitch angular velocity about a Y-axis, a yaw angular velocity about a Z-axis, an acceleration in an X-direction, an acceleration in a Y-direction, and an acceleration in a Z-direction, in each attitude of the HMD 100. The gyro and accelerometer sensors 110 are operable to output the measured angular velocities and accelerations to the control processing device 121. The gyro and accelerometer sensors 110 may be a hexaxial sensor formed by integrating the gyro sensor and the accelerometer sensor. The proximity sensor 105 is connected to the control processing device 121. The proximity sensor 105 is configured as mentioned above, and operable to output an output thereof to the control processing device 121.

The speaker 111A is a circuit connected to the control processing device 121 and configured to generate and output a sound corresponding to an electric signal indicative of the sound under control of the control processing device 121. The microphone 111B is a circuit connected to the control processing device 121 and configured to convert acoustic vibration of a sound to an electric signal. The microphone 111B is operable to output the converted electric signal indicative of the external sound to the control processing device 121.

The illuminance sensor 107 is a circuit connected to the control processing device 121 and configured to measure the illuminance of first light having a pre-set first wavelength band. The illuminance sensor 107 is operable to output the measured illuminance to the control processing device 121. As one example, the illuminance sensor 107 is constructed such that it includes a photodiode for outputting current at a level corresponding to the light intensity of entering light, through photoelectric conversion, and a peripheral circuit of the photodiode, such as an I-V conversion circuit for converting a current value in the photodiode to a voltage value. The illuminance sensor 107 is one example of the illuminance measurement section. The illuminance sensor 107 may be additionally used as an illuminance sensor for use in brightness control for the image forming device 104A.

The manipulation device 122 is a device connected to the control processing device 121 and configured to allow a user to input pre-set given instructions for power-on/off and others, into the HMD 100 therethrough. Examples thereof include one or more switches each assigned with a given function.

The GPS receiving device 123 is a device connected to the control processing device 121 and configured to measure the location of the HMD 100, using a satellite positioning system for measuring a current location on the earth, under control of the control processing device 121. It is operable to output a result of the measurement (latitude X, longitude Y, altitude Z) to the control processing device 121. The GPS receiving device 123 may be a device utilizing a GPS having an error correcting function, such as differential GPS (DGSP).

The communication device 124 is a circuit connected to the control processing device 121 and configured to perform data input and output with respect to an external device, under control of the control processing device 121. Examples thereof include: an interface circuit complying with the RS232C standard for a serial communication method; an interface circuit complying with the Bluetooth (trademark) standard; an interface circuit for performing infrared communications in compliance with the IrDA (Infrared Data Association) standard or the like; and an interface circuit complying with the USB (Universal Serial Bus) standard.

The communication device 124 is a communication card or the like for performing communications in a wired or wireless manner. As one example, it may be configured to perform communications with respect to an external device such as a server device, via a communication network in an Ethernet (trademark) environment or the like. In this case, the communication device 124 is operable to generate a communication signal containing data which is input thereinto from the control processing device 121 and is to be transferred to an external device, according to a communication protocol used in the communication network, and send the generated communication signal to the external device via the communication network. The communication device 124 is operable to: receive a communication signal from an external device via the communication network; retract data from the received communication signal; convert the extracted data to data having a format processible by the control processing device 121; and output the converted data to the control processing device 121. As one example, the communication device 124 is constructed such that it comprises a IEEE802.11b/g/n-compliant Wi-Fi Module (communication card) for sending and receiving a communication signal in compliance with the Wi-Fi (Wireless Fidelity) standard as one of wireless LAN standards.

The battery 126 is a device configured to store electric power and supply the electric power. The battery 126 may be a primary battery or may be a secondary battery. The power supply circuit 127 is a circuit configured to supply the electric power supplied from the battery 126, to each component of the HMD 100 requiring electric power, at a voltage appropriate to the component.

The storage device 125 is a circuit connected to the control processing device 121 and configured to store therein various types of given programs and various types of given pieces of data. The various types of given programs include control processing programs such as a control program for controlling each component of the HMD 100 in a manner appropriate to a function of the component, and a gesture processing program for identifying a gesture based on outputs of the proximity sensor 105. The various types of given pieces of data include data necessary for controlling the HMD 100, such as a threshold th for evaluating a result of the measurement in the illuminance sensor 107. For example, the storage device 125 includes a ROM (Read Only Memory), and an EEPROM (Electronically Erasable and Programmable Read Only Memory) which is a rewritable and non-volatile storage element. Further, the storage device 125 comprises a RAM (Random Access Memory) for storing therein data generated during execution of the given program, or the like, to serve as a so-called working memory for the control processing device 121.

The control processing device 121 is provided as a means to: control each component of the HMD 100 in a manner appropriate to a function of the component; identify a pre-set given gesture based on outputs of the proximity sensor 105; and execute processing according to a result of the identification. As one example, the control processing device 121 is constructed such that it includes a CPU (Central Processing Unit) and a peripheral circuit of the CPU. The control processing device 121 includes a control section 1211, a gesture processing section 1212, and a detection result utilization section 1213, which are functionally formed therein by executing the control processing program. However, it will be appreciated that part or all of the control section 1211, the gesture processing section 1212 and the detection result utilization section 1213 may alternatively be constructed as hardware components.

The control section 1211 serves as a means to control each component of the HMD 100 in a manner appropriate to a function of the component.

The gesture processing section 1212 serves as a means to identify a pre-set given gesture based on outputs of the plurality of pyroelectric elements (in this embodiment, four pyroelectric elements RA to RD) included in the proximity sensor 105. The gesture processing section 1212 is operable to notify the detection result utilization section 1213 of a result of the identification (detection). In this embodiment, a combination of the proximity sensor 105 including the plurality of pyroelectric elements RA to RD, and the gesture processing section 1212 forms one example of the gesture detection section for detecting second light having a second wavelength band (in the embodiment, infrared light) to thereby detect a gesture. The aforementioned first wavelength band includes at least a band not overlapping the second wavelength band.

Further, the control section 1211 serves as a means to disable the gesture detection section when the result of the measurement in the illuminance sensor 107 is equal to or greater than the pre-set threshold th. More specifically, in this embodiment, the control section 1211 is operable to cause the gesture processing section 1212 to ignore the outputs of the plurality of pyroelectric elements RA to RD comprised in the proximity sensor 105 to thereby disable the gesture detection section.

The detection result utilization section 1213 serves as a means to execute a given processing based on the result of the detection in the gesture detection section (in this embodiment, the result of the identification in the gesture processing section 1212). For example, in the case where the result of the identification in the gesture processing section 1212 is so-called "flick", the detection result utilization section 1213 is operable to change the state of display in such a manner as to perform page-turning from a first image formed on the image forming device 104A according to the display control of the display control device 104 DR, to a second image. Further, for example, in the case where the result of the identification in the gesture processing section 1212 is so-called "slide", the detection result utilization section 1213 is operable to change the state of display in such a manner as to move an image formed on the image forming device 104A according to the display control of the display control device 104 DR.

The control processing program may be recorded in a server computer for managing and providing programs, as one of the programs, and then stored (downloaded, installed) in the storage device 125, from the server computer via a communication line and the communication device 124. Alternatively, the control processing program may be recorded in a recording medium such as a CD-ROM or an USB memory, and then stored (downloaded, installed) in the storage device 125, from the recording medium via the communication device 124.

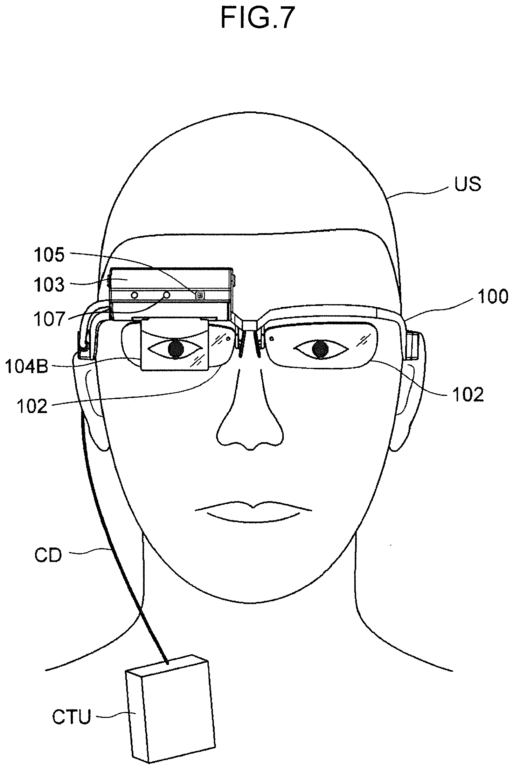

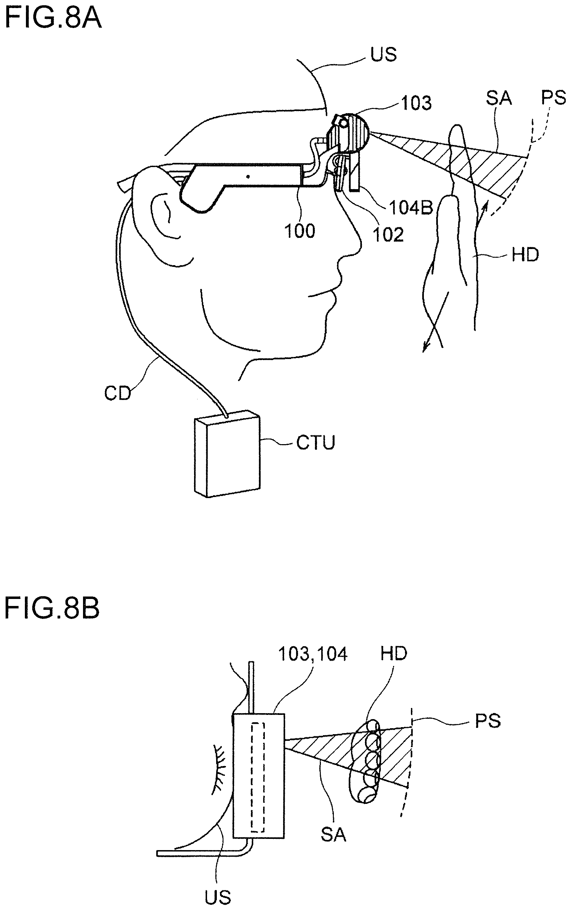

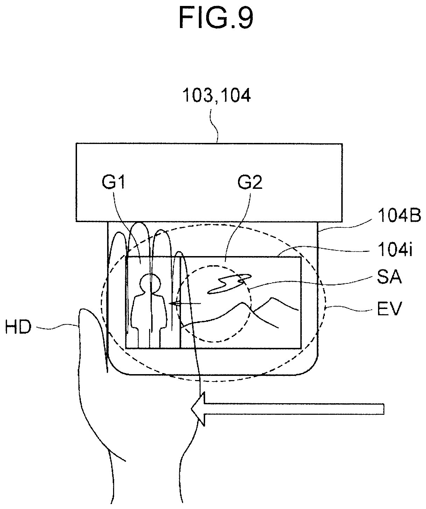

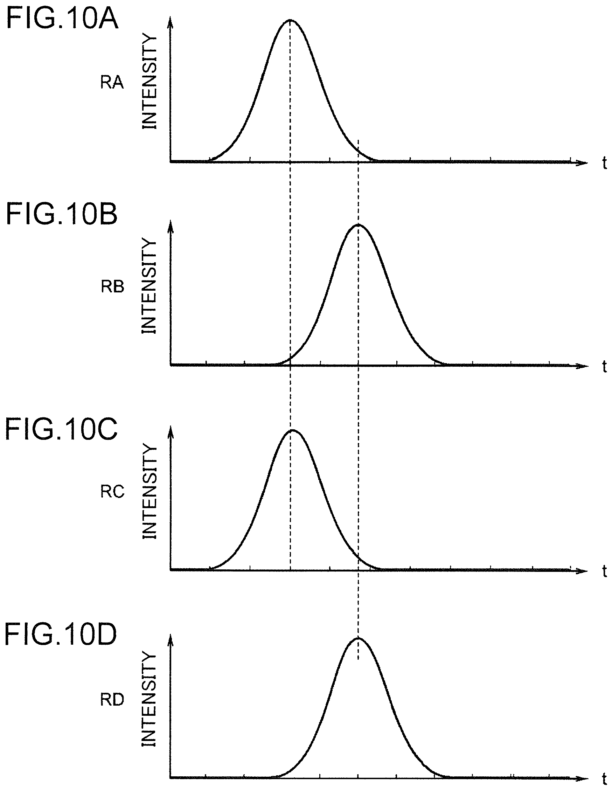

Among operations in the HMD 100A, a basic operation for detecting a gesture will be firstly described. FIG. 7 is a front view depicting a worm state of the wearable electronic device according to this embodiment. FIG. 8 is a side view and a fragmentary top view depicting the worn state of the wearable electronic device according to this embodiment. FIG. 8 also depicts a hand HD of a user US. FIG. 8A is a side view, and FIG. 8B is a fragmentary top view. FIG. 9 is a diagram depicting one example of an image which is viewed by a user through the see-through type image display. FIG. 10 is charts depicting one example of outputs of the proximity sensor in the wearable electronic device according to this embodiment. FIG. 10A and FIG. 10B depict, respectively, an output of the pyroelectric element RA and an output of the pyroelectric element RB, and FIG. 10C and FIG. 10D depict, respectively, an output of the pyroelectric element RC and an output of the pyroelectric element RD. In each of the charts in FIG. 10, the horizontal axis represents time, and the vertical axis represents intensity (output level). As used herein, the term "gesture manipulation" means a motion for enabling at least the hand HD or finger(s) of the user US to move into or away from a detection region of the proximity sensor 105, and a motion detectable by the gesture processing section 1212 of the control processing device 121 of the HMD 100 through the proximity sensor 105.

As depicted in FIG. 9, a screen 104i of the image display device 104B is disposed to overlap an effective field-of-view EV of the user's eye opposed to the image display device 104B (in this embodiment, disposed to fall within the effective field-of-view EV). The detection region SA of the proximity sensor 105 exists within the effective field-of-view of the user's eye opposed to the image display device 104B. It is desirable to adjust and set a location and direction of the proximity sensor 105 such that the detection region SA is preferably located to fall within a field of view of the user's eye during steady fixation or a field of view thereinside (horizontal viewing angle: about 90-degrees or less, vertical viewing angle: about 70-degrees or less), more preferably, located inward of the field of view during steady fixation and in overlapping relation to the effective field-of-view EV or a field of view thereinside (horizontal viewing angle: about 30-degrees or less, vertical viewing angle: about 20-degrees or less).

FIG. 9 depicts an example where the detection region SA overlaps the screen 104i. As above, in a state in which the user US wears, on the head, the frame 101 as the head-mountable member, the proximity sensor 105 is set such that the detection region SA thereof is located within the field of view of the eye of the user US. This makes it possible to reliably visually recognize move-in and move-away of the hand HD with respect to the detection region SA of the proximity sensor 105, without any movement of the eye, while observing the hand through the screen 104i. Particularly, by setting the detection region SA of the proximity sensor 105 to fall within the field of view during steady fixation or a field of view thereinside, it becomes possible to reliably perform the gesture manipulation while recognizing the detection region SA, even when the user is observing the screen. Further, the detection region SA of the proximity sensor 105 may be set to fall within the effective field-of-view EV or a field of view thereinside. This makes it possible to more reliably perform the gesture manipulation. The detection region SA may be set to overlap the screen 104i. In this case, it is possible to more reliably perform the gesture manipulation. In the case where the proximity sensor 105 includes a plurality of pyroelectric elements RA to RD, as in this embodiment, on an assumption that an entirety of the plurality of pyroelectric elements RA to RD is deemed as a single light-receiving element, a maximum detection range of the light-receiving element is defined as the detection region. In the case where the detection region SA of the proximity sensor 105 is set to overlap the screen 104i as depicted in FIG. 9, an image indicative of the detection region SA may be displayed on the screen 104i (e.g., the range of the region SA is displayed by a solid line). In this instance, the user can reliably recognize the detection region SA and thus more reliably perform the gesture-based manipulation.

Next, a basic principle of gesture detection will be described. When there is nothing in front of the user US under a condition that the proximity sensor 105 is operating, the proximity sensor 105 does not receive invisible light as detection target light, so that the gesture processing section 1212 of the control processing device 121 determines that no gesture is performed. On the other hand, when the user US moves his/her hand HD closer to a position in front of his/her eye as depicted in FIG. 8, the proximity sensor 105 detects invisible light radiated from the hand HD, and, according to a resulting output signal from the proximity sensor 105, the gesture processing section 1212 determines that a gesture has been performed. Although the following description will be made based on an assumption that a gesture is performed by the hand HD of the user US, the user US may perform the gesture using finger(s) or other region, or using an instructing tool made of a material capable of radiating invisible light.

As mentioned above, the proximity sensor 105 includes four pyroelectric elements RA to RD arranged in a two-row and two-column matrix (see FIG. 5). Therefore, when the user US moves the hand HD closer to a position in front of the HMD 100, from a left, right, upper or lower side thereof, detection signals from the pyroelectric elements RA to RD will vary in terms of output timing.

As one example, referring to FIGS. 8 and 9, when the user US performs a gesture of moving the hand HD in front of the HMD 100 from the right side toward the left side, invisible light radiated from the hand HD enters the proximity sensor 105. In this situation, the invisible light is first received by the pyroelectric elements RA, RC. Thus, as depicted in FIG. 10, signals of the pyroelectric elements RA, RC first rise up, and, at a later timing, signals of the pyroelectric elements RB, RD rise up. Then, the signals of the pyroelectric elements RA, RC fall down, and, at a later timing, the signals of the pyroelectric elements RB, RD fall down (depiction is omitted). The gesture processing section 1212 detects these signal timings, and determines that the user US has performed a gesture of moving the hand HD from the right side to the left side.

Similarly, in the case where signals of the pyroelectric elements RB, RD rise up, and, at a later timing, signals of the pyroelectric elements RA, RC rise up, whereafter the signals of the pyroelectric elements RB, RD fall down, and, at a later timing, the signals of the pyroelectric elements RA, RC fall down, the gesture processing section 1212 determines that the user US has performed a gesture of moving the hand HD from the left side to the right side.

Similarly, in the case where signals of the pyroelectric elements RA, RB rise up, and, at a later timing, signals of the pyroelectric elements RC, RD rise up, whereafter the signals of the pyroelectric elements RA, RB fall down, and, at a later timing, the signals of the pyroelectric elements RC, RD fall down, the gesture processing section 1212 determines that the user US has performed a gesture of moving the hand HD from the upper side to the lower side.

Similarly, in the case where signals of the pyroelectric elements RC, RD rise up, and, at a later timing, signals of the pyroelectric elements RA, RB rise up, whereafter the signals of the pyroelectric elements RC, RD fall down, and, at a later timing, the signals of the pyroelectric elements RA, RB fall down, the gesture processing section 1212 determines that the user US has performed a gesture of moving the hand HD from the lower side to the upper side.

Similarly, in the case where, after a signal of the pyroelectric element RA rises up, signals of the pyroelectric elements RB, RC rise up at a later timing, and a signal of the pyroelectric element RD rises up at a much more later timing, whereafter, after the signal of the pyroelectric element RA falls down, the signals of the pyroelectric elements RB, RC fall down at a later timing, and the signal of the pyroelectric element RD falls down at a much more later timing, the gesture processing section 1212 determines that the user US has performed a gesture of moving the hand HD from the upper right side to the lower left side.

Similarly, in the case where, after a signal of the pyroelectric element RB rises up, signals of the pyroelectric elements RA, RD rise up at a later timing, and a signal of the pyroelectric element RC rises up at a much more later timing, whereafter, after the signal of the pyroelectric element RB falls down, the signals of the pyroelectric elements RA, RD fall down at a later timing, and the signal of the pyroelectric element RC falls down at a much more later timing, the gesture processing section 1212 determines that the user US has performed a gesture of moving the hand HD from the upper left side to the lower right side.

Similarly, in the case where, after a signal of the pyroelectric element RD rises up, signals of the pyroelectric elements RB, RC rise up at a later timing, and a signal of the pyroelectric element RA rises up at a much more later timing, whereafter, after the signal of the pyroelectric element RD falls down, the signals of the pyroelectric elements RB, RC fall down at a later timing, and the signal of the pyroelectric element RA falls down at a much more later timing, the gesture processing section 1212 determines that the user US has performed a gesture of moving the hand HD from the lower left side to the upper right side.

Similarly, in the case where, after a signal of the pyroelectric element RC rises up, signals of the pyroelectric elements RA, RD rise up at a later timing, and a signal of the pyroelectric element RB rises up at a much more later timing, whereafter, after the signal of the pyroelectric element RC falls down, the signals of the pyroelectric elements RA, RD fall down at a later timing, and the signal of the pyroelectric element RB falls down at a much more later timing, the gesture processing section 1212 determines that the user US has performed a gesture of moving the hand HD from the lower right side to the upper left side.

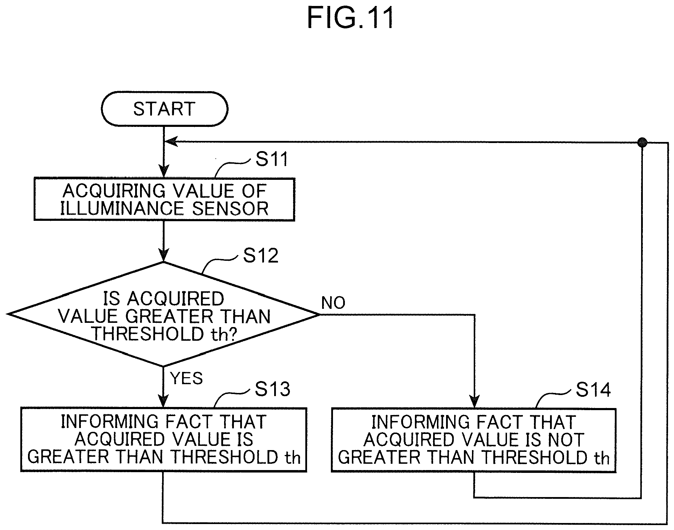

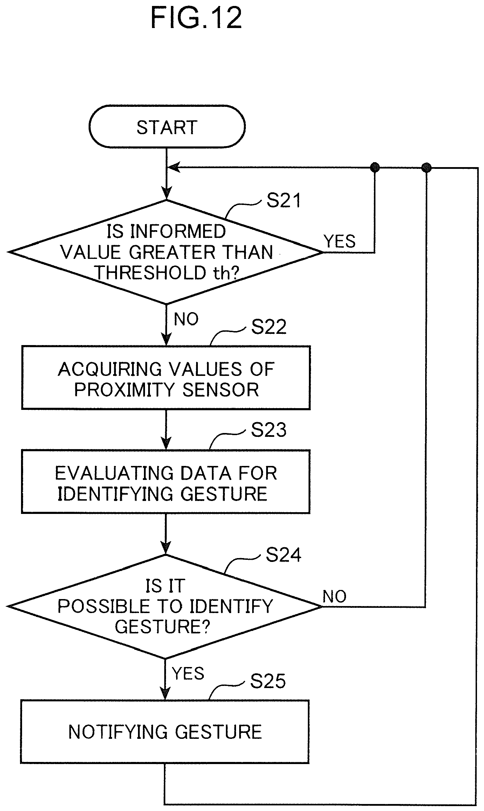

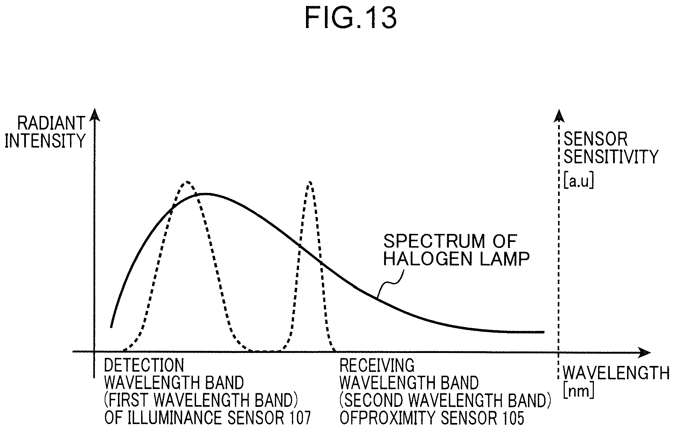

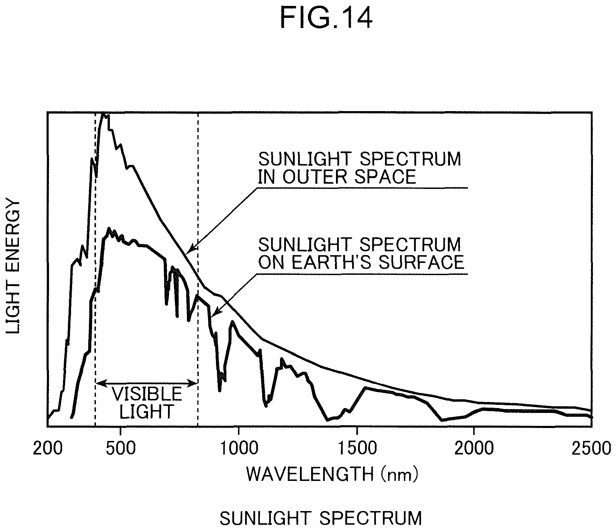

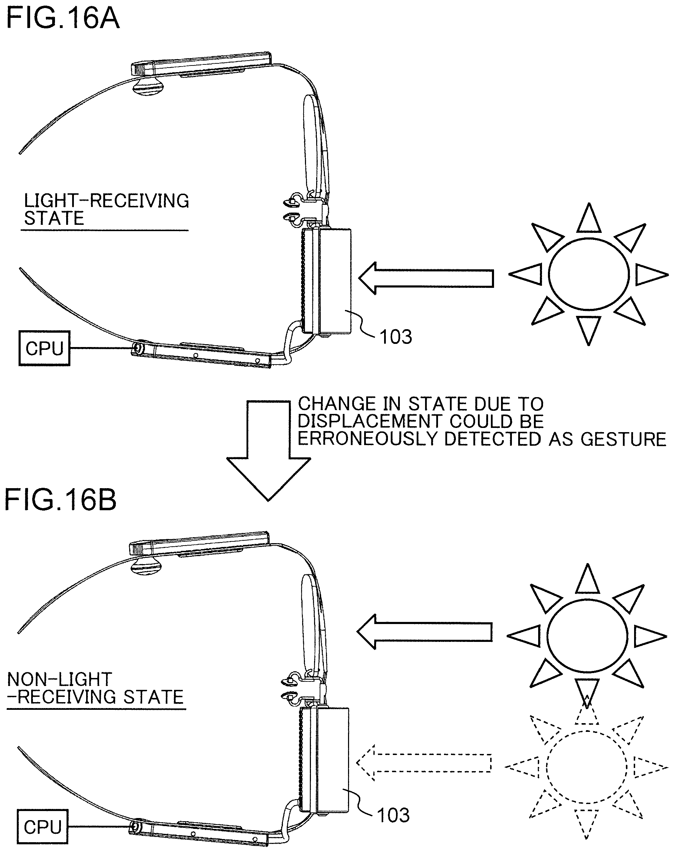

Next, control of disabling the gesture processing section will be described. FIG. 11 is a flowchart depicting operation of the control section in the wearable electronic device according to this embodiment. FIG. 12 is a flowchart depicting operation of the gesture processing section in the wearable electronic device according to this embodiment. FIG. 13 is a graph for explaining a relationship between a detection wavelength band (first wavelength band) of the illuminance sensor and a receiving wavelength band (second wavelength band) of the proximity sensor, with respect to a radiation intensity spectrum of a halogen lamp as one of a light source. In FIG. 13, the horizontal axis represents wavelength expressed in nm, and the right vertical axis and the left vertical axis represent, respectively, sensor sensitivity (expressed in a.u) of each sensor, and radiation intensity in the spectrum of the halogen lamp. FIG. 14 is a graph indicating spectra AM0 (outer space) and AM 1.5 (earth's surface) of sunlight as another example of the light source. In FIG. 14, the horizontal axis represents wavelength, and the vertical axis represents radiation intensity (light energy). FIG. 16 is diagrams for explaining an erroneous detection of a gesture, occurring when the wearable electronic device is relatively moved with respect to the light source. FIG. 16A depicts a state in which the proximity sensor 105 receives light from the light source while being located approximately exactly in front of the light source, and FIG. 16B depicts a state in which it becomes difficult to receive light from the light source, because due to displacement of the HMD 100, the proximity sensor 105 is not located exactly in front of the light source.

In the gesture detection method using the proximity sensor 105, when light including a relatively large amount of infrared light, from a light source such as the sun or a halogen lamp, enters the proximity sensor 105, an erroneous detection can occur because it is difficult to discriminate whether the light is infrared light from the hand HD or the like of the user US or infrared light from the light source, as mentioned above. Particularly, in the case where the proximity sensor 105 is constructed such that it includes a plurality of pyroelectric elements RA to RD arranged in a two-dimensional matrix pattern, wherein the gesture processing section 1212 is operable to identify a gesture based on rising timings and falling timings of respective signals output from the pyroelectric elements RA to RD, when the user US moves, e.g., performs a head rotating motion, from the state depicted in FIG. 16A, wherein the proximity sensor 105 is located approximately exactly in front of the light source and thus infrared light significantly enters the proximity sensor 105, the HMD 100 is also displaced along with the head rotating motion, so that the proximity sensor 105 becomes failing to be located exactly in front of the light source, and thereby infrared light from the light source becomes less likely to enter the proximity sensor 105, as depicted in FIG. 16B. As a result, the HMD 100 views the light source as if it moved from the right side to the left side. Thus, the signals output from the pyroelectric elements RA to RD rise up and fall down at the timings described above with reference to FIG. 10, so that there is a risk that the output signals are erroneously identified as a gesture indicative of a movement from right side to the left side.

Therefore, in this embodiment, the HMD 100 operates as follows. In FIG. 11, the control section 1211 acquires an output of the illuminance sensor 107, i.e., an illuminance measured by the illuminance sensor 107 (S11). Then, the control section 1211 determines whether or not the acquired output of the illuminance sensor 107 (measured illuminance) is greater than a pre-set threshold th (S12).

In this embodiment, the illuminance sensor 107 is configured to receive visible light (which is one example of the first light having the first wavelength band (detection wavelength band)), whereas the proximity sensor 105 is configured to receive infrared light (which is invisible light as one example of the second light having the second wavelength band), as depicted in FIG. 13. That is, the two sensors receive two types of lights each having a different wavelength band. This means that the illuminance sensor 107 does not directly measure the second light to be received by the proximity sensor 105. However, the light intensity of near-infrared light can be estimated from the illuminance of visible light, because a radiation intensity spectrum of a commonly-used light source such as a halogen lamp has a given profile, as depicted in FIG. 13. Thus, when the proximity sensor 105 receives infrared light, it is possible to estimate whether the received infrared light is infrared light from the hand HD of the user US or an influence of infrared light from the halogen lamp. Further, in sunlight, a light energy spectrum thereof also has a given profile as depicted in FIG. 14, so that it is possible to estimate the light intensity of near-infrared light from the illuminance of visible light. The same can be applied to other light sources such as a fluorescent lamp and a light bulb. As above, by measuring the illuminance of the first light using the illuminance sensor 107, it is possible to indirectly measure the light intensity of the second light to be received by the proximity sensor 105. From a viewpoint of enabling more accurate estimation, the first wavelength band in the illuminance sensor 107 is preferably a wavelength band in which a first light intensity of the first light (in this embodiment, visible light) correlates with a second light intensity of the second light (in this embodiment, infrared light). More preferably, the second wavelength band in the proximity sensor 105 is a wavelength band of infrared light, and the first wavelength band is a wavelength band of visible light near or adjacent to the wavelength band of infrared light. In this case, the two wavelength bands lie near or adjacent to each other. This is more desirable because correlativity therebetween becomes higher. More preferably, the first wavelength band overlaps the second wavelength band. In this case, the two wavelength bands overlap each other. This is more desirable because correlativity therebetween becomes higher. More preferably, the first wavelength band includes the second wavelength band. This is more desirable because it becomes possible to reliably measure the light intensity in the second wavelength band. In each case, the first wavelength band is set to be a wavelength band in which the first light intensity of the first light correlates with the second light intensity of the second light, so that it is possible to more accurately estimate the light intensity of the second light. Thus, it is possible to determine whether the light intensity of the second light is infrared light from the hand HD or the like of the user US or infrared light from the sun or the light source. As a result, it is possible to allow the control section 1211 to optimally control selection between enabling and disabling in the gesture detection section (in this embodiment, the gesture processing section 1212), based on the illuminance measured by the illuminance sensor 107, to thereby optimally reduce an erroneous detection of a gesture.

The above threshold th for evaluating the light intensity of infrared light received by the proximity sensor 105, using the luminance measured by the luminance censor 107, is set to a value of the output of the illuminance sensor 107 at a time, for example, when it becomes impossible to obtain a significant output from the proximity sensor 105 during the course of operation of acquiring respective outputs of the proximity sensor 105 and the illuminance sensor 107 under a condition that each of the proximity sensor 105 and the illuminance sensor 107 faces an actual light source (e.g., sunlight), and gradually displacing the proximity sensor 105 and the illuminance sensor 107 with respect to the light source.

Returning to FIG. 11, as a result of the determination in the processing S12, when the acquired output of the illuminance sensor 107 (measured illuminance) is greater than the threshold th (YES), the control section 1211 notifies the gesture processing section 1212 of the fact that the output of the illuminance sensor 107 is greater than the threshold th (S13), and returns the processing routine to the processing S11. On the other hand, as a result of the determination in the processing S12, when the acquired output of the illuminance sensor 107 (measured illuminance) is not greater than (is equal to or less than) the threshold th (YES), the control section 1211 notifies the gesture processing section 1212 of the fact that the output of the illuminance sensor 107 is not greater than the threshold th (NO) (S14), and returns the processing routine to the processing S11. Thus, upon start of operation of the HMD 100, the control section 1211 will repeatedly execute the processing of acquiring the output of the illuminance sensor 107 (S11), the processing for determination as to the acquired output (SI2) and the processing according to a result of the determination (S13 or S14), at given time intervals.

Then, in FIG. 12, the gesture processing section 1212 determines whether or not the output of the illuminance sensor 107 (measured illuminance) is greater than the threshold th (S21). More specifically, the gesture processing section 1212 determines whether it has received, from the control section 1211, the notification about the fact that the output of the illuminance sensor 107 is greater than the threshold th, or the notification about the fact that the output of the illuminance sensor 107 is not greater than the threshold th.

As a result of the determination, when the gesture processing section 1212 has received, from the control section 1211, the notification about the fact that the output of the illuminance sensor 107 is greater than the threshold th (YES), the gesture processing section 1212 returns the processing routine to the processing S21. That is, the outputs of the plurality of pyroelectric elements RA to RD included in the proximity sensor 105 is ignored by the gesture processing section 1212, i.e., the gesture detection section is disabled.

On the other hand, as a result of the above determination, when the gesture processing section 1212 has received, from the control section 1211, the notification about the fact that the output of the illuminance sensor 107 is not greater than the threshold th (NO), the gesture processing section 1212 acquires the outputs of the plurality of pyroelectric elements RA to RD included in the proximity sensor 105 (S22).

Subsequently, the gesture processing section 1212 evaluates rising timings and falling timings of outputs of the plurality of pyroelectric elements RA to RD included in the proximity sensor 105 (S23).

Subsequently, the gesture processing section 1212 determines whether or not it is possible to identify a gesture (S24). As mentioned above, a gesture is identified based on a time-series sequence of rising timings and falling timings of respective signals output from of the pyroelectric elements RA to RD included in the proximity sensor 105. Thus, a gesture cannot be identified based on execution of the processing S22 and the processing S23 in only one processing cycle. Therefore, the gesture processing section 1212 determines whether or not it is possible to identify a gesture, by combining a processing result in the processing S22 and the processing S23 executed in a current processing cycle, with a plurality of previous processing results, e.g., a processing result in a last processing cycle and a processing result in a last-but-one processing cycle.

As a result of this determination, when it is impossible to identify a gesture, the gesture processing section 1212 returns the processing routine to the processing S21. On the other hand, when it is possible to identify a gesture, the gesture processing section 1212 notifies the detection result utilization section 1213 of the identified gesture (S25), and returns the processing routine to the processing S21. Thus, upon start of operation of the HMD 100, the gesture processing section 1212 will repeatedly execute the processing for determination as to the notification from the control section 1211 (S21), the processing of acquiring the outputs of the proximity sensor 105 based on the determination as to the notification (S22), the processing of evaluating the acquired outputs (S23), the processing of identifying a gesture according to a result of the evaluation (S24) and the processing (S25 or S21) based on a result of the identification, at given time intervals.

Upon receiving the notification generated from the gesture processing section 1212 in the processing S25, the detection result utilization section 1213 executes a given processing based on the identification result in the gesture processing section 1212. For example, when the identification result in the gesture processing section 1212 is so-called "flick", the detection result utilization section 1213 changes the state of display in such a manner as to perform page-turning from a first image formed on the image forming device 104A according to the display control of the display control device 104 DR, to a second image.

As described above, in the HMD 100 as one example of a wearable electronic device, the gesture detection method implemented therein and the gesture detection program therefor, according to this embodiment, when an illuminance measured by (a result of the measurement in) the illuminance sensor is equal to or greater than the pre-set threshold th, the second light from the light source is deemed to be received by the proximity sensor 105 included in a combination of the proximity sensor 105 and the gesture processing section 1212 which forms one example of the gesture detection section, and therefore the gesture detection section (in this embodiment, the gesture processing section 1212) is disabled. Thus, the HMD 100, the gesture detection method and the gesture detection program makes it possible to reduce an erroneous detection of a gesture due to the second light from the light source.

In the HMD 100, the gesture detection method and the gesture detection program according to this embodiment, the measurement direction of the illuminance sensor 107 and the detection direction of the proximity sensor 105 are same directions. Thus, by measuring the illuminance of the first light using the illuminance sensor 107, it is possible to more accurately estimate the light intensity of the second light entered in the gesture detection section (in this embodiment, the pyroelectric elements RA to RD).

In the HMD 100, the gesture detection method and the gesture detection program according to this embodiment, it is possible to disable the gesture detection section by causing the gesture processing section 1212 to ignore the outputs of the pyroelectric elements RA to RD, thereby reducing an erroneous detection of a gesture.

Even in the situation where the intensity of external light viewed from the side of the proximity sensor 105 changes along with displacement of the head, as described with reference to FIG. 16, the HMD 100, the gesture detection method and the gesture detection program according to this embodiment makes it possible to reduce an erroneous detection of a gesture. This feature is effective in a wearable electronic device capable of being worn on the head, such as the HMD 100.

In the above embodiment, the gesture detection section is disabled by causing the gesture processing section 1212 to ignore the outputs of the pyroelectric elements RA to RD of the proximity sensor 105. However, the present invention is not limited thereto. For example, the control section 1211 may be configured to disable the gesture detection section by shutting off feeding of electric power to the gesture detection section or by shifting the gesture detection section to a sleep state. In this case, by shutting off feeding of electric power to the gesture detection section or by shifting the gesture detection section to a sleep state, it is possible to disable the gesture detection section to thereby reduce an erroneous detection of a gesture. This also makes it possible to achieve electric power saving.

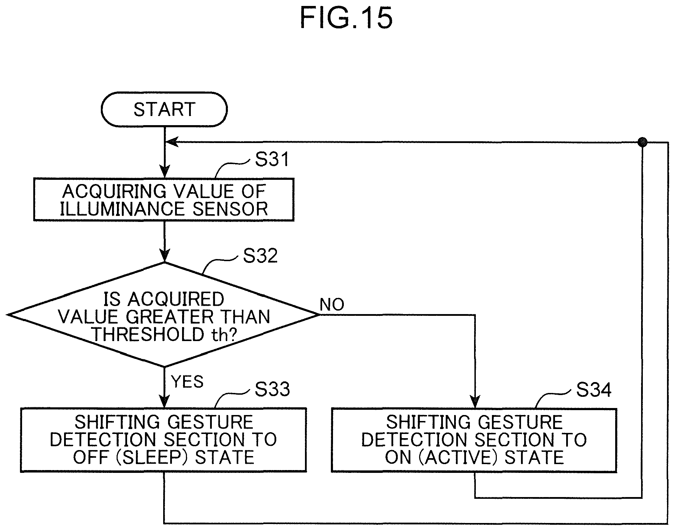

FIG. 15 is a flowchart depicting another operation of the control section in the wearable electronic device according to the above embodiment (specifically, operation of the control section in the above embodiment to shut off feeding of electric power to the gesture detection section so as to disable the gesture detection section). More specifically, the control section 1211 executes processings depicted in FIG. 15, as follows, instead of the processings described above with reference to FIG. 11. In FIG. 15, first of all, the control section 1211 acquires an output of the illuminance sensor 107, i.e., an illuminance measured by the illuminance sensor 107 (S31). Then, the control section 1211 determines whether or not the acquired output of the illuminance sensor 107 (measured illuminance) is greater than a pre-set threshold th (S32). As a result of this determination, when the acquired output of the illuminance sensor 107 is greater than the threshold th (YES), the control section 1211 shuts off feeding of electric power to the gesture detection section or shifts the gesture detection section to a sleep state (S33), and returns the processing routine to the processing S31. In this modified embodiment, in the processing S33, the control section 1211 shuts off feeding of electric power to the gesture processing section 1212 or shifts the gesture processing section 1212 to a sleep state, and returns the processing routine to the processing S31. On the other hand, as a result of the determination in the processing S32, when the acquired output of the illuminance sensor 107 is not greater than (is equal to or greater than) the threshold th (NO), the control section 1211 turns on feeding of electric power to the gesture detection section or shifts the gesture detection section to an active state (S34), and returns the processing routine to the processing S31. In this modified embodiment, in the processing S34, the control section 1211 turns on feeding of electric power to the gesture processing section 1212 or shifts the gesture processing section 1212 to an active state, and returns the processing routine to the processing S31.

Alternatively, the control section 1211 may be configured to disable the gesture detection section by causing the detection result utilization section 1213 to ignore a result of the detection in the gesture detection section (a result of the identification in the gesture processing section 1212). In this case, by causing the detection result utilization section 1213 to ignore a result of the detection in the gesture detection section, it is possible to disable the gesture detection section to thereby reduce an erroneous detection of a gesture.

In the above embodiment, the threshold th may be changeably set depending on a use environment of the HMD 100. For example, the storage device 125 stores therein a plurality of thresholds thk by light sources, and one of the plurality of thresholds thk is alternatively selected according to an input manipulation using the manipulation device 122 by the user US or according to a gesture manipulation by the user US with respect to the plurality of thresholds thk displayed on the image forming device 104A. As one example, a daytime threshold th1 set for daytime on an assumption that the light source is the sun and a nighttime threshold th2 set for night on an assumption that the light source is a halogen lamp are stored in the storage device 125, and one of the thresholds th1, th2 is appropriately selected and set by the user.

This application is based on Japanese Patent Application Serial No. 2015-102965 A filed in Japan Patent Office on May 20, 2015.

Although the present invention has been described with reference to the above embodiments and examples, it will be apparent to one of the ordinary skill in the art that modifications to the described embodiment may be made without departing from the scope of the present invention, as defined by the attached claims.

### INDUSTRIAL APPLICABILITY

The present invention can provide a wearable electronic device, a gesture detection method for a wearable electronic device, and a gesture detection program for a wearable electronic device.

## Claims

1. A wearable electronic device (100) comprising:
an illuminance measurement section (107) having a first wavelength band configured to measure an illuminance of first light;
a gesture detection section (105,1212) having a second wavelength band configured to detect second light to thereby detect a gesture; wherein the gesture detection section comprises a proximity sensor (105) having a plurality of pyroelectric elements (RA-RD) and a gesture processing section (1212) configured to identify a pre-set given gesture based on outputs of the plurality of pyroelectric elements (RA-RD); and
a control section (1211) configured to disable the gesture detection section when a result of the measurement in the illuminance measurement section is equal to or greater than a pre-set threshold,
wherein the first wavelength band includes at least a wavelength band not overlapping the second wavelength band.

2. The wearable electronic device (100) as recited in claim 1, wherein the first wavelength band is set to be a wavelength band in which a first light intensity of the first light correlates with a second light intensity of the second light; wherein the second wavelength band is a wavelength band of infrared light, and the first wavelength band is a wavelength band of visible light adjacent to the wavelength band of infrared light.

3. The wearable electronic device (100) as recited in claim 1 or 2, wherein a measurement direction of the illuminance measurement section and a detection direction of the gesture detection section are same directions.

4. The wearable electronic device (100) as recited in any one of claims 1 to 3, wherein:
the pyroelectric elements (RA-RD) are arranged in a two-dimensional matrix pattern; and
the control section (1211) is configured to disable the gesture detection section in that it is configured to cause the gesture processing section to ignore the outputs of the plurality of pyroelectric elements.

5. The wearable electronic device (100) as recited in any one of claims 1 to 3, wherein the control section (1211) disables the gesture detection section by shutting off feeding of electric power to the gesture detection section or by shifting the gesture detection section to a sleep state.

6. The wearable electronic device (100) as recited in any one of claims 1 to 5, which further comprises a head-mountable member (101) designed to be worn on a head of a user.

7. A gesture detection method to be executed at the wearable electronic device (100) of claim 1, comprising:
measuring an illuminance of first light having a first wavelength band;
detecting second light having a second wavelength band to thereby detect a gesture; and
disabling the gesture detection when a result of the measurement regarding the illuminance of the first light having the first wavelength band is equal to or greater than a pre-set threshold, wherein the first wavelength band includes at least a wavelength band not overlapping the second wavelength band.

8. The gesture detection method as recited in claim 7, wherein the illuminance of the first light having the first wavelength band is measured under a condition that the first wavelength band is set to be a wavelength band in which a first light intensity of the first light correlates with a second optical intensity of the second light.

9. A gesture detection program product comprising instructions to cause the device of claim 1 to execute the steps of the method of claim 7.

## Patentansprüche

1. Tragbare elektronische Vorrichtung (100), umfassend:
einen Beleuchtungsstärkemessabschnitt (107) mit einem ersten Wellenlängenband, das konfiguriert ist, um eine Beleuchtungsstärke von erstem Licht zu messen;
einen Gestenerkennungsabschnitt (105, 1212) mit einem zweiten Wellenlängenband, das konfiguriert ist, um zweites Licht zu erkennen, um dadurch eine Geste zu erkennen; wobei der Gestenerkennungsabschnitt einen Näherungs-sensor (105) mit einer Vielzahl von pyroelektrischen Elementen (RA-RD) und einen Gestenverarbeitungsabschnitt (1212) umfasst, der konfiguriert ist, um eine voreingestellte gegebene Geste basierend auf Ausgaben der Vielzahl von pyroelektrischen Elementen (RA-RD) zu identifizieren; und
einen Steuerabschnitt (1211), der konfiguriert ist, um den Gestenerkennungsabschnitt zu deaktivieren, wenn ein Ergebnis der Messung in dem Beleuchtungsstärkemessabschnitt gleich oder größer als ein voreingestellter Schwellenwert ist,
wobei das erste Wellenlängenband mindestens ein Wellenlängenband aufweist, das das zweite Wellenlängenband nicht überlappt.

2. Tragbare elektronische Vorrichtung (100) nach Anspruch 1, wobei das erste Wellenlängenband eingestellt ist, ein Wellenlängenband zu sein, in dem eine erste Lichtintensität des ersten Lichts mit einer zweiten Lichtintensität des zweiten Lichts korreliert; wobei das zweite Wellenlängenband ein Wellenlängen-band von Infrarotlicht ist und das erste Wellenlängenband ein Wellenlängenband von sichtbarem Licht, angrenzend an das Wellenlängenband von Infrarotlicht, ist.

3. Tragbare elektronische Vorrichtung (100) nach Anspruch 1 oder 2, wobei eine Messrichtung des Beleuchtungsstärkemessabschnitts und eine Erkennungs-richtung des Gestenerkennungsabschnitts gleiche Richtungen sind.

4. Tragbare elektronische Vorrichtung (100) nach einem der Ansprüche 1 bis 3, wobei:
die pyroelektrischen Elemente (RA-RD) in einem zweidimensionalen Matrixmuster angeordnet sind; und
der Steuerabschnitt (1211) konfiguriert ist, um den Gestenerkennungs-abschnitt zu deaktivieren, indem er konfiguriert ist, zu bewirken, dass der Gestenverarbeitungsabschnitt die Ausgaben der Vielzahl von pyroelektrischen Elemente ignoriert.

5. Tragbare elektronische Vorrichtung (100) nach einem der Ansprüche 1 bis 3, wobei der Steuerabschnitt (1211) den Gestenerkennungsabschnitt deaktiviert, indem er die Zufuhr von elektrischer Energie zu dem Gestenerkennungsabschnitt abschaltet oder indem er den Gestenerkennungsabschnitt in einen Ruhezustand versetzt.

6. Tragbare elektronische Vorrichtung (100) nach einem der Ansprüche 1 bis 5, die weiter ein kopfmontierbares Element (101) umfasst, das dazu bestimmt ist, auf einem Kopf eines Benutzers getragen zu werden.

7. Gestenerkennungsverfahren, das an der tragbaren elektronischen Vorrichtung (100) nach Anspruch 1 durchgeführt werden soll, umfassend:
Messen einer Beleuchtungsstärke von erstem Licht mit einem ersten Wellenlängenband;
Erkennen von zweitem Licht mit einem zweiten Wellenlängenband, um dadurch eine Geste zu erkennen; und
Deaktivieren der Gestenerkennung, wenn ein Ergebnis der Messung bezüglich der Beleuchtungsstärke des ersten Lichts mit dem ersten Wellenlängenband gleich oder größer als ein voreingestellter Schwellenwert ist, wobei das erste Wellenlängenband mindestens ein Wellenlängenband aufweist, das das zweite Wellenlängenband nicht überlappt.

8. Gestenerkennungsverfahren nach Anspruch 7, wobei die Beleuchtungsstärke des ersten Lichts mit dem ersten Wellenlängenband unter einer Bedingung gemessen wird, dass das erste Wellenlängenband eingestellt ist, um ein Wellenlängenband zu sein, in dem eine erste Lichtintensität des ersten Lichts mit einer zweiten optischen Intensität des zweiten Lichts korreliert.

9. Gestenerkennungsprogrammprodukt, das Anweisungen umfasst, um zu bewirken, dass die Vorrichtung nach Anspruch 1 die Schritte des Verfahrens von Anspruch 7 durchführt.

## Revendications

1. Dispositif électronique portable (100) comprenant :
une section de mesure d'éclairement (107) présentant une première bande de longueur d'onde configurée pour mesurer un éclairement de première lumière ;
une section de détection de geste (105, 1212) présentant une seconde bande de longueur d'onde configurée pour détecter une seconde lumière pour ainsi détecter un geste ; dans laquelle la section de détection de geste comprend un capteur de proximité (105) présentant une pluralité d'éléments pyroélectriques (RA-RD) et une section de traitement de geste (1212) configurée pour identifier un geste donné prédéfini sur la base de sorties de la pluralité d'éléments pyroélectriques (RA-RD) ; et
une section de commande (1211) configurée pour désactiver la section de détection de geste lorsqu'un résultat de la mesure dans la section de mesure d'éclairement est égal ou supérieur à un seuil prédéfini,
dans lequel la première bande de longueur d'onde inclut au moins une bande de longueur d'onde ne chevauchant pas la seconde bande de longueur d'onde.

2. Dispositif électronique portable (100) selon la revendication 1, dans lequel la première bande de longueur d'onde est définie pour être une bande de longueur d'onde dans laquelle une première intensité de lumière de la première lumière est en corrélation avec une seconde intensité de lumière de la seconde lumière; dans lequel la seconde bande de longueur d'onde est une bande de longueur d'onde de lumière infrarouge, et la première bande de longueur d'onde est une bande de longueur d'onde de lumière visible adjacente à la bande de longueur d'onde de lumière infrarouge.

3. Dispositif électronique portable (100) selon la revendication 1 ou 2, dans lequel une direction de mesure de la section de mesure d'éclairement et une direction de détection de la section de détection de geste sont des directions identiques.

4. Dispositif électronique portable (100) selon l'une quelconque des revendications 1 à 3, dans lequel :
les éléments pyroélectriques (RA-RD) sont agencés dans un motif matriciel bidimensionnel ; et
la section de commande (1211) est configurée pour désactiver la section de détection de geste, en ce qu'elle est configurée pour amener la section de traitement de geste à ignorer les sorties de la pluralité d'éléments pyroélectriques.

5. Dispositif électronique portable (100) selon l'une quelconque des revendications 1 à 3, dans lequel la section de commande (1211) désactive la section de détection de geste en éteignant l'alimentation en énergie électrique à la section de détection de geste ou en commutant la section de détection de geste vers un état de veille.

6. Dispositif électronique portable (100) selon l'une quelconque des revendications 1 à 5, qui comprend en outre un élément montable sur une tête (101) conçu pour être porté sur une tête d'un utilisateur.

7. Procédé de détection de geste à exécuter au niveau du dispositif électronique portable (100) selon la revendication 1, comprenant les étapes consistant à :
mesurer un éclairement de première lumière présentant une première bande de longueur d'onde ;
détecter une seconde lumière présentant une seconde bande de longueur d'onde pour ainsi détecter un geste ; et
désactiver la détection de geste lorsqu'un résultat de la mesure concernant l'éclairement de la première lumière présentant la première bande de longueur d'onde est égal ou supérieur à un seuil prédéfini, dans lequel la première bande de longueur d'onde inclut au moins une bande de longueur d'onde ne chevauchant pas la seconde bande de longueur d'onde.

8. Procédé de détection de geste selon la revendication 7, dans lequel l'éclairement de la première lumière présentant la première bande de longueur d'onde est mesuré à condition que la première bande de longueur d'onde soit définie pour être une bande de longueur d'onde dans laquelle une première intensité de lumière de la première lumière est en corrélation avec une seconde intensité optique de la seconde lumière.

9. Produit de programme de détection de geste comprenant des instructions pour amener le dispositif selon la revendication 1 à exécuter les étapes du procédé selon la revendication 7.
